# EUROPÄISCHE PATENTSCHRIFT

(11) **EP 3 304 632 B1**
(45) Veröffentlichungstag und Bekanntmachung des Hinweises auf die Patenterteilung: **11.09.2019**
(21) Anmeldenummer: 16729760.5
(22) Anmeldetag: 01.06.2016
(51) Int. Cl.: H01M 10/04, H01M 10/0583, B65H 45/101, H01M 10/0525

(54) **VERFAHREN UND VORRICHTUNG ZUM Z-FALTEN EINES BAHNMATERIALS**
METHOD AND APPARATUS FOR ZIGZAG FOLDING A MATERIAL WEB
PROCÉDÉ ET DISPOSITIF SERVANT À PLIER EN ACCORDÉON UNE BANDE DE MATÉRIAU

(30) Priorität: 01.06.2015 DE 102015108651
(43) Veröffentlichungstag der Anmeldung: 11.04.2018
(73) Patentinhaber: Technische Universität Berlin, 10623 Berlin (DE)
(72) Erfinder: GLODDE, Arne, 10779 Berlin (DE); BACH, Gordon, 14059 Berlin (DE); MOOY, Robert, 31515 Wunstorf (DE); AYDEMIR, Muhammed, 13403 Berlin (DE)
(74) Vertreter: Bittner, Thomas L.
(86) Internationale Anmeldenummer: PCT/DE2016/100253
(87) Internationale Veröffentlichungsnummer: WO 2016/192717

(56) Entgegenhaltungen:
- US-A- 1 109 296

## Beschreibung

Die Erfindung betrifft ein Verfahren und eine Vorrichtung zum z-Falten eines Bahnmaterials.

### Hintergrund

Derartige Verfahren zum z-Falten eines Bahnmaterials können in verschiedenen Anwendungen zum Einsatz kommen, In den Falten des gefalteten Bahnmaterials können Einlagen angeordnet sein, sei es in allen Falten oder nur in einem Teil der Falten. Ein Verfahren zum z-Falten kann zum Beispiel in Verbindung mit der Herstellung eines Zellverbunds von Batteriezellen genutzt werden.

Die derartige Zellherstellung kennt eine Vielzahl unterschiedlicher Zellkerne, beispielweise zum Aufbau von Lithium-Ionen Batteriezellen. Diese unterscheiden sich jedoch in der Regel in der Zusammensetzung ihrer Einzelkomponenten, einem Elektroden-Separator-Verbund (Zellverbund), nicht voneinander. Die Verbundbauweise des Zellkerns stellt den Strukturaufbau durch die unterschiedlichen Herstellungsverfahren dar. Im allgemeinen Stand der Technik wird zwischen vier Verbundbauweisen unterschieden: Die rundgewickelte und die prismatisch gewickelte Verbundbauweise, die Stapelbauweise sowie die z-gefaltete Verbundbauweise.

Die rundgewickelte Verbundbauweise besteht in der Regel aus einer Kathoden- und Anodenbahn, welche mit zwei Separatoren zusammen aufgewickelt wird. Die flachgewickelte Verbundbauweise unterscheidet sich von der rundgewickelten Verbundbauweise um einen flachen Wickelkern mit Ellipsenform.

Die gefaltete Verbundbauweise basiert auf der Verwendung eines regelmäßig z-gefalteten Separatorendlosbandes, in welches wechselseitig konfektionierte Elektrodenblätter eingebracht werden. Aus DE 10 2010 055 611 A1 ist bekannt, lediglich Anoden und Kathoden als vorgcschnittene Blätter vorzulegen und den Separator stattdessen auf die Abmessungen des fertigen Stapels vorzufalten und bereitzustellen. US 2014 / 0101928 A1 beschreibt ein gegenläufiges Schieberegister zum Erzeugen einer Z-Faltung bei gleichzeitigem Einbringen vieler Elektrodenblätter beim Auffalten. In DE 10 2010 055 617 A1 wird ein Verfahren zur Herstellung eines Elektrodenstapels aus Kathode, Anode und Separator für eine Batterie beschrieben. Wenigstens eine dieser Komponenten, i.d.R. der Separator, liegt als Endlosmaterial vor. Das Separatormaterial wird ungefaltet zugeführt und mit mindestens einer zugeschnittenen Komponente bestückt. Anschließend wird dieser Verbund mit bereits aufgelegten und fixierten Elektroden gefaltet. Dieses Verfahren unterscheidet sich somit von DE 10 2010 055 611.4, als dass der Separator nicht bereits als vorgefaltetes Endlosmaterial bereitgestellt wird. Es behebt somit die Probleme der Maßhaltigkeit des Separators aufgrund von Ausdehnungen/Schrumpfungen im vorgefalteten Zustand.

DE 10 2010 055 608 A1 beschreibt ein Verfahren zum Herstellen eines Elektrodenstapels, bei dem eine Schicht des Elektrodenstapels als Endlosmaterial vorliegt und alternierend gefaltet wird. Die beiden anderen Schichten werden in die durch die Faltung entstehenden Taschen eingelegt. Die Faltung entsteht mittels Anordnen von Begrenzungsstäben, zwischen denen das Material eingebracht wird. Die Stäbe werden anschließend seitlich herausgezogen. Die Bauform des z-gefalteten Zellkerns ist durch einen endlosen Separator mit entweder bereits aufliegenden Elektroden oder mit nachträglich in die Falten eingelegten Elektroden charakterisiert.

Der Aufbau gestapelter Zellverbünde unterscheidet sich im Wesentlichen durch die blattartige Ausführung des Separatormaterials von denen der gewickelten und gefalteten Verbundbauweisen, in denen der Separator in der Regel bandförmig vorliegt. In US 4,080,728 A wird ein Verfahren zur Stapelung einzelner Lagen zur Herstellung einer Batteriezelle beschrieben. Hierbei werden alle Bestandteile des Zellkerns als geschnittene Einzelelemente zu einem Stapel gefügt.

Wie das stapelnde gehört auch das faltende Verfahren zu den ältesten der Verbundherstellung. Bereits 1984 wurde in US 4,479,300 A ein Verfahren zur kontinuierlichen Verbundherstellung vorgestellt. Hierbei werden in die Falten eines bereits endlosgefalteten Separatorbandes wechselseitig Elektrodenblätter eingelegt. Durch die hohen Prozessdurchsätze und die hohe Verbundqualität wickelnder Verfahren wurden in der Kommerzialisierung der Lithium-Ionen Batteriezellen im Jahr 1990 vorwiegend Rundzellen produziert. Seit 2000 stieg durch die Miniaturisierung von Elektronikgeräten jedoch wieder die Nachfrage nach kompakten, flachen Lithium-Ionen Batteriezellen. Dadurch rückte die Automatisierung der faltenden bzw. der stapelnden Verbundherstellung wieder in den Fokus der industrialisierten Produktionstechnik.

Aber auch in Verbindung mit anderen Anwendungen besteht Bedarf für verbesserte Technologien zum Falten.

Aus dem Dokument DE 10 2012 022 751 B4 sind ein Verfahren und eine Vorrichtung zum Ablegen einer flexiblen Materialbahn angegeben, wobei die Materialbahn mittels einer Zuführeinrichtung zugeführt und mittels einer Legeeinrichtung auf einer Ablegestelle zick-zack-förmig abgelegt wird, wobei die Materialbahn nach dem Austritt aus der Zuführeinrichtung von mindestens zwei in zumindest entgegengesetzte Legerichtungen bewegbaren Eingriffselementen der Legeeinrichtung kontaktiert und zur Ablegestelle geführt wird. Die Eingriffselemente verändern ihre Lage während des Kontakts mit der materialbahn zwischen einer Eingriffsposition und einer Freigabeposition. Während des Transports rollt sich die Materialbahn auf einem Kontaktabschnitt des Eingriffselements ab.

In dem Dokument DE 26 34 300 A1 ist eine Vorrichtung zum Falten und Stapeln von bedrucktem Papier beschrieben. Es sind Maßnahmen vorgesehen, dass abgelegte Papier im Bereich der Falzkanten beständig nach unten zu drücken.

Das Dokument US 1,109,296 beschreibt eine Vorrichtung zum Falten einer Webbahn mit mehreren Falteinrichtungen. Die Faltvorrichtungen werden entlang entgegengesetzt auseinander verlaufenden länglichen Endlosbahnen bewegt und greifen in die Webbahn in abwechselnder Folge ein, wodurch die Webbahn in Falten gezogen wird, welche sich abwechselnd in entgegengesetzte Richtungen erstrecken.

### Zusammenfassung

Aufgabe der Erfindung ist es, ein Verfahren und eine Vorrichtung zum z-Falten eines Bahnmaterials anzugeben, mit denen ein kontinuierliches Falten mit möglichst hohem Durchsatz ermöglicht ist.

Zur Lösung sind ein Verfahren und eine Vorrichtung zum z-Falten eines Bahnmaterials nach den unabhängigen Ansprüchen 1 und 9 geschaffen. Ausgestaltungen sind Gegenstand von abhängigen Unteransprüchen.

Nach einem Aspekt ist ein Verfahren zum z-Falten eines Bahnmaterials geschaffen, bei dem ein zu faltendes Bahnmaterial in einer Faltvorrichtung entlang einer Zuführrichtung kontinuierlich zugeführt wird. Das Bahnmaterial wird in einem proximalen Bereich der Faltvorrichtung mittels Greifeinrichtungen wechselseitig gegriffen, wobei die Greifeinrichtungen von gegenüberliegenden Seiten des Bahnmaterials auf Lücke zu dem proximalen Bereich hingeführt werden. Das Bahnmaterial wird mittels der Greifeinrichtungen gehalten und in einen distalen Bereich der Faltvorrichtung transportiert, wobei hierbei das Bahnmaterial z-gefaltet wird. In dem distalen Bereich wird das Bahnmaterial von den Greifeinrichtungen gelöst und in einem Stapel mit Falten abgelegt, wobei sich die Falten in dem Stapel quer zur Zuführrichtung erstrecken. Für die Greifeinrichtungen auf den gegenüberliegenden Seiten des Bahnmaterials verläuft jeweils eine gerade Verbindungslinie zwischen einer proximalen Position der Greifeinrichtung beim Greifen des Bahnmaterials in dem proximalen Bereich und einer distalen Position derselben Greifeinrichtung beim Lösen des Bahnmaterials in dem distalen Bereich schräg zur Zuführrichtung, Ein Abstand zwischen benachbarten Greifeinrichtungen, die beim Greifen des zu faltenden Bahnmaterials dieses nacheinander greifen, entspricht einer Faltlänge, also dem Abstand zwischen aufeinanderfolgenden Falten entlang des z-gefalteten Bahnmaterials.

Nach einem weiteren Aspekt ist eine Vorrichtung zum z-Falten eines Bahnmaterials vorgesehen. Die Vorrichtung weist eine Zuführeinrichtung auf die eingerichtet ist, ein zu faltendes Bahnmaterial einer Faltvorrichtung entlang einer Zuführrichtung zuzuführen. Es sind Greifeinrichtungen vorgesehen, die eingerichtet sind, dass Babnmaterial in einem proximalen Bereich der Faltvorrichtung zu greifen, das Bahnmaterial zu halten und in einen distalen Bereich der Faltvorrichtung zu transportieren, wobei das Bahnmaterial hierbei z-gefaltet wird, und sich von dem Bahnmaterial zu lösen und das Bahnmaterial in einem Stapel mit Falten in dem distalen Bereich abzulegen. Die Greifeinrichtungen werden mittels einer Transporteinrichtung von gegenüberliegenden Seiten des Bahnmaterials auf Lücke zu dem proximalen Bereich hingeführt. In dem Stapel des abgelegten Bahnmaterials erstrecken sich Falten quer zur Zuführrichtung, Für die Greifeinrichtungen auf den gegenüberliegenden Seiten des Bahnmaterials verläuft jeweils eine gerade Verbindungslinie zwischen einer proximalen Position der Greifeinrichtung beim Greifen des Bahnmaterials in dem proximalen Bereich und einer distalen Position derselben Greifeinrichtung beim Lösen des Bahnmaterials in dem distalen Bereich schräg zur Zuführrichtung. Ein Abstand zwischen benachbarten Greifeinrichtungen, die beim Greifen des zu faltenden Bahnmaterials dieses nacheinander greifen, entspricht einer Faltlänge, also dem Abstand zwischen aufeinanderfolgenden Falten entlang des z-gefalteten Bahnmaterials.

Das Greifen und das Halten des Bahnmaterials kann mittels Greiferelementen der Greifeinrichtung ausgeführt werden.

Die Greifeinrichtungen greifen das zu faltende Bahnmaterial nacheinander in einem Abstand, welcher der Faltenlänge entspricht, so dass der Abstand zwischen benachbarten Greifpositionen (benachbarten greifenden Greifeinrichtung) entlang des sich geradlinig erstreckenden Bahnmaterials, also Positionen, in denen das Bahnmaterial jeweils von einer Greifeinrichtung gegriffen wird, gleich der Faltenlänge ist.

Hierbei muss sich das zu faltende Bahnmaterial weder beim Greifen noch beim Transportieren in die abgelegte Stellung nach dem Greifen in der gestreckten Stellung (entlang einer geraden Linie erstrecken. Der Verlauf des Bahnmaterials kann von einer solchen geraden Lage abweichen, zum Beispiel durchhängen, Jedenfalls entspricht das Maß für den Abstand zueinander benachbarter greifender Greifeinrichtungen, wenn sich das Bahnmaterial entlang einer (ggf. gedachten) geraden Linie erstreckt, der Faltenlänge.

Ein Abstand zwischen aufeinanderfolgenden Greifeinrichtungen bei deren Bewegung entlang einer Bewegungsbahn kann vor dem Betrieb einstellbar sein, zum Beispiel mittels Verwendung von verstellbaren Greifeinrichtungen, bei denen die Relativlage zu den benachbarten Greifeinrichtungen veränderbar ist. Der eingestellte Abstand ist dann für den Betrieb festgelegt, nämlich auf die Faltenlänge.

Die geraden Verbindungslinien auf den beiden Seiten des Bahnmaterials können einer V-Stellung entsprechend angeordnet sein. Ein Winkel zwischen der Zuführrichtung und der jeweiligen geraden Verbindungslinie kann ein spitzer Winkel sein. Der Winkel zwischen den beiden geraden Verbindungslinien kann spitz sein.

Eine Zuführgeschwindigkeit für das Zuführen des zu faltenden Bahnmaterials, welches getaktet ausgeführt werden kann, sowie eine Transportgeschwindigkeit für das Transportieren der Greifeinrichtungen zum proximalen Bereich hin sind unabhängig voneinander einstellbar, Die Zuführgeschwindigkeit und die Transportgeschwindigkeit sind aufeinander abgestimmt.

Mittels der Greifeinrichtungen wird das zu faltende Bahnmaterial gegriffen und während des Verlagerns der Greifeinrichtungen zum proximalen Bereich hin gehalten. Beispielweise wird das Bahnmaterial beim Greifen zwischen Greifarmen geklemmt oder mittels Reibschluss gehalten. Es findet beim Transport so keine Relativbewegung zwischen einem gegriffenen Bahnmaterialabschnitt und der Greifeinrichtung statt, insbesondere in Bezug auf deren aktive Greif- oder Greiferelemente.

Die Greifeinrichtungen können auf den gegenüberliegenden Seiten des Bahnmaterials zwischen der proximalen Position und der distalen Position jeweils zumindest abschnittsweise entlang einer Bewegungsbahn geführt werden, die entlang der geraden Verbindungslinie verläuft. Dieses kann bedeuten, dass die Transporteinrichtung, mit der die Greifeinrichtungen auf den gegenüberliegenden Seiten des Bahnmaterials jeweils zwischen der proximalen und der distalen Position transportiert und geführt werden, ganz oder teilweise zwischen den beiden Positionen eine gerade Führung (Bewegungsbahn) aufweist.

Die Greifeinrichtungen können auf den gegenüberliegenden Seiten des Bahnmaterials mittels einer jeweiligen Transporteinrichtung auf einer geschlossenen Bewegungsbahn von dem proximalen Bereich über den distalen Bereich wieder zurück zum proximalen Bereich geführt werden. Die geschlossene Bewegungsbahn der jeweiligen Transporteinrichtung kann gekrümmte und gerade Bewegungsbahnen aufweisen. Beispielsweise kann eine ovale Bewegungsbahn vorgesehen sein, bei der wenigstens auf einer Längsseite eine geradlinige Führung ausgebildet ist, insbesondere auf einer dem Bahnmaterial gegenüberliegenden Seite, Alternativ können die Greifeinrichtungen zwischen dem proximalen Bereich und dem distalen Bereich entlang einer Bewegungsbahn hin und her bewegt werden, zum Beispiel zwischen End- oder Haltepunkten eines Führungsschienensystems, was im hier angegebenen Sinne auch einer geschlossenen Bewegungsbahn entspricht.

Die Greifeinrichtungen können das Bahnmaterial randseitig auf gegenüberliegenden Seiten des Bahnmaterials greifen. Das Ausbilden der Griffverbindung zwischen den Greifeinrichtungen und dem Bahnmaterial kann auf einen solchen Randgriff beschränkt sein.

Die Zuführrichtung kann horizontal ausgerichtet sein. Alternativ kann die Zuführrichtung vertikal oder in einer Schräglage ausgerichtet sein. Bei den Ausgestaltungen verlaufen die Falten in dem Stapel des abgelegten Bahnmaterials jeweils quer zur Zuführrichtung.

In zumindest einem Teil der Falten des Stapels können Einlagen angeordnet werden.

Die in den Falten des abgelegten Bahnmaterials schließlich angeordneten Einlagen können vor und / oder nach dem Greifen des Bahnmaterials durch die Greifeinrichtungen zu dem Bahnmaterial hinzugeführt werden. Das Einbringen der Einlagen kann erfolgen, bevor das z-Falten, welches mit dem Greifen des Bahnmaterials durch die Greifeinrichtungen beginnt, beim Ablegen des Bahnmaterials abgeschlossen ist. In den verschiedenen Ausführungsformen können Einlagen auf einer oder beiden Seiten des Bahnmaterials zugeführt werden. Bei dem Heranführen der Einlagen an das zu faltende oder bereits teilgefaltete Bahnmaterial kann die Zuführrichtung für die Einlagen einen spitzen Winkel mit der Zuführrichtung des Bahnmaterials bilden. Das Zuführen der Einlagen kann in den verschiedenen Ausgestaltungen mit Hilfe eines die Einlagen transportierenden Transportsystems erfolgen, beispielsweise mittels Transportsystemen, die Transportrichtungen aufweisen, wenn Einlagen auf beiden Seiten des Bahnmaterials zuzuführen sind.

Die Einlagen können vor und / oder während des z-Faltens an das Bahnmaterial herangeführt werden.

Die Einlagen können vor dem Ablegen des Bahnmaterials in dem Stapel an diesem haftend angeordnet werden. Nach dem Zuführen der Einlagen zum zu faltenden Bahnmaterial hin haften diese auf der Oberfläche des Bahnmaterials, wobei ein geeignetes Haftmittel an den Einlagen und / oder auf der Oberfläche des Bahnmaterials vorgesehen sein kann, Auf das Vorsehen einer Haftung der Einlagen am Bahnmaterial kann verzichtet werden, wenn die an das Bahnmaterial herangeführten Einlagen beispielsweise aufgrund der Schwerkraft auf dem Bahnmaterial verbleiben, während dieses gefaltet wird. Auch kann die Konfiguration hinsichtlich der Betriebsparameter der Faltvorrichtung geeignet gewählt werden, um die Notwendigkeit für ein Haften der Einlagen an dem Bahnmaterial zu mindern oder ganz auszuschließen. In diesem Zusammenhang sind insbesondere von Bedeutung die Transportgeschwindigkeit der Greifeinrichtungen und die Schrägstellung der geraden Verbindungslinien für die Greifeinrichtungen in Bezug auf die Zuführrichtung.

Das Bahnmaterial kann ein Trenn- oder Separatormaterial aus einem elektrisch isolierenden Werkstoff, und die Einlagen können Elektroden sein, so dass der Stapel als z-gefalteter Stapel mit Anoden, Kathoden und Separator hergestellt wird. Beispielsweise können auf diese Weise Lithium-Ionen Batteriezellen hergestellt werden. Nicht nur beim Herstellen eines z-gefalteten Stapels mit Anoden, Kathoden und Separator, sondern auch beim Falten anderer Bahnmaterialien können mit den vorgeschlagenen Technologien hohe Faltgeschwindigkeiten erreicht werden. Beispielsweise kann das Verfahren vorsehen, pro Sekunde wenigstens fünf Falten zu erzeugen, alternativ wenigstens zehn Falten pro Sekunde.

Im Zusammenhang mit der Vorrichtung zum z-Falten eines Bahnmaterials mit in Falten angeordneten Einlagen können die vorangehend in Verbindung mit dem Verfahren erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung mit einer Faltvorrichtung zum z-Falten eines Bahnmaterials mit in Falten angeordneten Einlagen vor Beginn eines Faltprozesses,
- Fig. 2: eine schematische Darstellung mit der Faltvorrichtung aus Fig. 1 nach dem Beginn des Faltprozesses,
- Fig. 3: eine schematische Darstellung mit der Faltvorrichtung aus Fig. 1 während des Faltprozesses, wobei eine Einlage an den zu faltenden Bahnmaterial angeordnet ist,
- Fig. 4: eine schematische Darstellung mit der Faltvorrichtung aus Fig. 1 in einem fortgeschrittenen Zustand des Faltprozesses, wobei mehrere Einlagen auf den zu faltenden Bahnmaterial angeordnet sind,
- Fig. 5: eine schematische Darstellung mit der Faltvorrichtung aus Fig. 1, wobei das zu faltende Bahnmaterial teilweise in einem Stapel abgelegt ist, und
- Fig. 6: eine schematische Darstellung einer Greifeinrichtung.

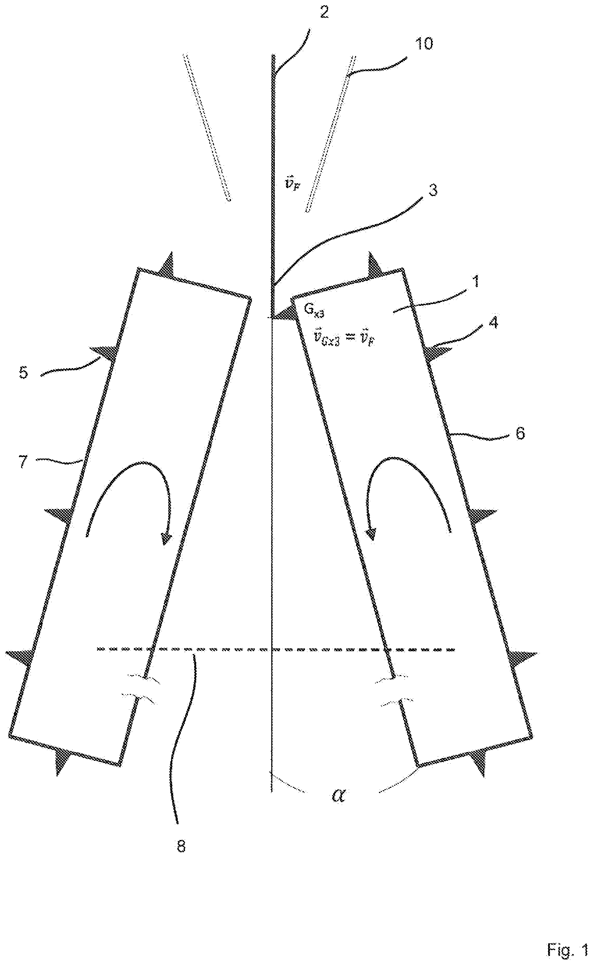

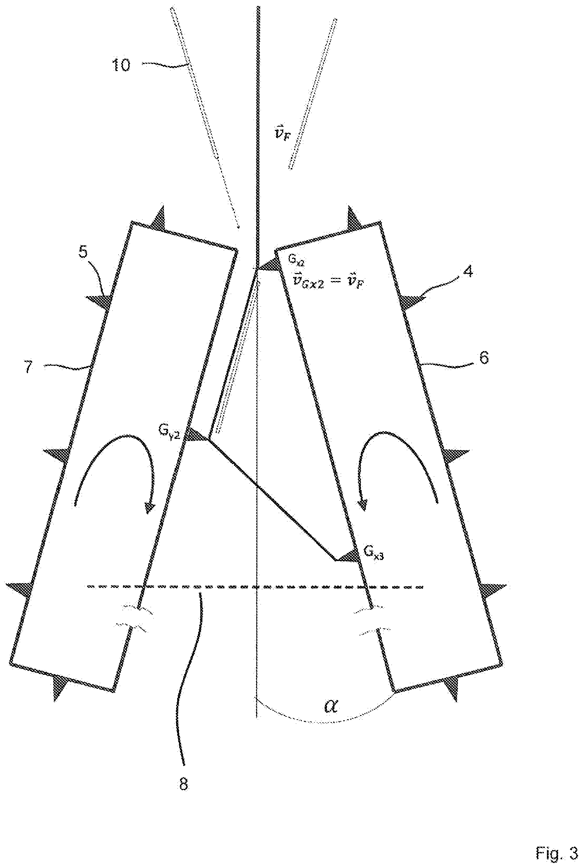

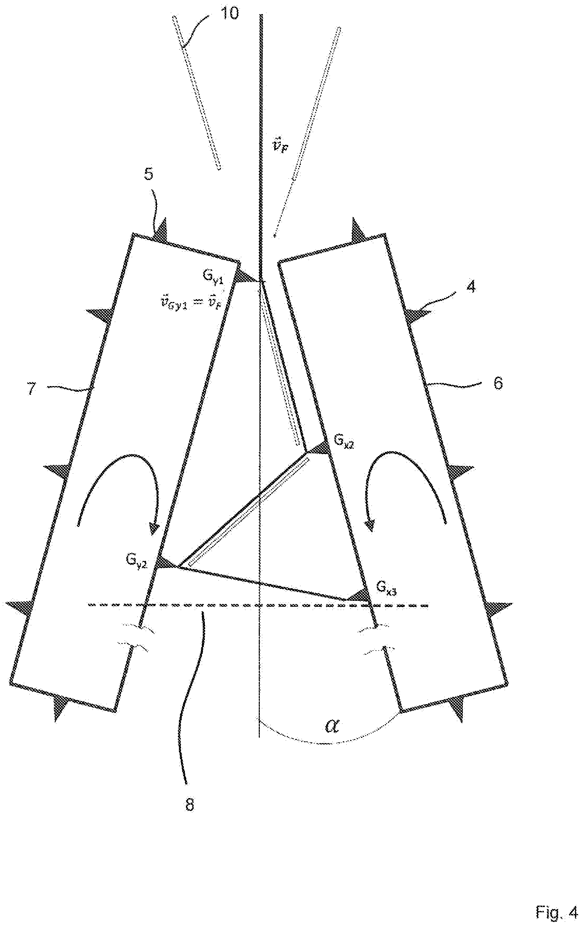

Die Fig. 1 bis 5 zeigen schematische Darstellungen mit einer Faltvorrichtung 1 zum z-Falten eines Bahnmaterials 2. Gemäß Fig. 1 wird das Bahnmaterial 2 entlang einer Zuführrichtung der Faltvorrichtung 1 zugeführt, wobei die Zuführrichtung in den dargestellten Ausführungsbeispie-len vertikal und parallel zum Bahnmaterial ausgerichtet ist. In einem proximalen Bereich 3 der Faltvorrichtung 1 wird das zu faltende Bahnmaterial 2 gegriffen, um dann gefaltet zu werden.

Zum Greifen und Transportieren des Bahnmaterials 2 in der Faltvorrichtung 1 sind auf gegenüberliegenden Seiten des Bahnmaterials 2 jeweils mehrere Greifeinrichtungen 4, 5 an einem zugeordneten Transportsystem 6, 7 aufgenommen, derart, dass die mehreren Greifeinrichtungen 4, 5 jeweils auf einer geschlossenen Bewegungsbahn umlaufend und kontinuierlich zum proximalen Bereich 3 hin transportiert werden. Die mehreren Greifeinrichtungen 4, 5 werden auf Lücke in dem proximalen Bereich 3 zu dem Bahnmaterial 2 hingeführt, um dieses zu greifen und zu halten.

Die Bewegungsbahn der mehreren Greifeinrichtungen 4, 5 ist in den Fig. 1 bis 5 schematisch dargestellt. Bei einer Implementierung wird die Bewegungsbahn im Bereich der von den Längsseiten zu unterscheidenden Stirnseiten der Transporteinrichtungen 6, 7 eher auf einer gekrümmten Bewegungsbahn verlaufen.

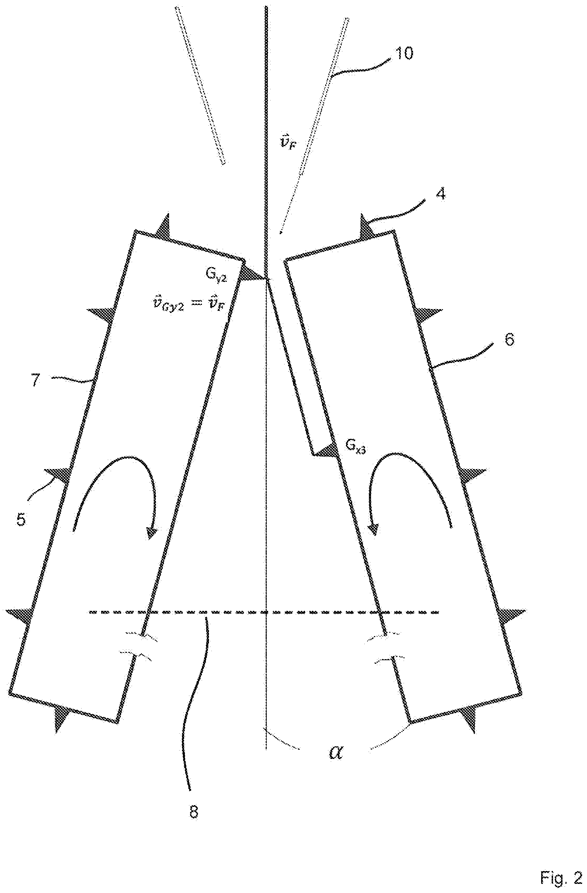

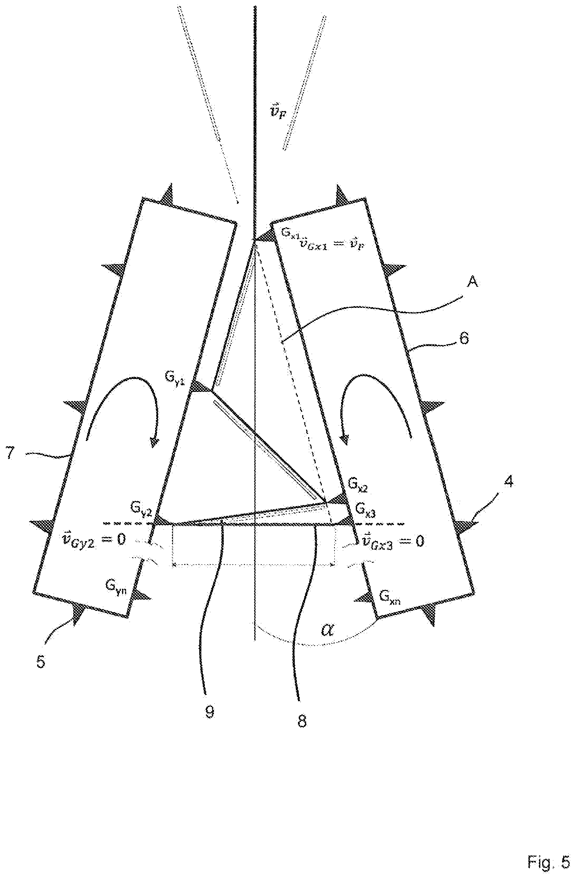

Die Fig. 2 bis 5 zeigen den Fortschritt der z-faltung des Bahnmaterials 2 mittels der Faltvorrichtung 1. Hierbei bewegen sich die mehreren Greifeinrichtungen 4, 5 jeweils aus dem proximalen Bereich 3 der Faltvorrichtung 1 in einen distalen Bereich 8 der Faltvorrichtung 1, um dann schließlich das gefaltete Material in einem Stapel 9 abzulegen (vgl. Fig. 5), bei dem die erzeugten Falten quer zur Zuführrichtung des Bahnmaterials 2 verlaufen. Eine gerade Verbindungslinie A zwischen einer Position der Greifeinrichtung im proximalen Bereich 2 und einer Position derselben Greifeinrichtung im distalen Bereich 8 der Faltvorrichtung 1 verläuft schräg zur Zuführrichtung des Bahnmaterials 2, was in den Fig. 1 bis 5 mittels eines Winkels α gezeigt ist.

Gemäß der Darstellung in Fig. 2 haben benachbart oder nacheinander greifende Greifeinrichtungen Gₓ₃ und G_{y2} entlang der sich geradlinig hierzwischen erstreckenden Separatorbahn einen Abstand, welcher der Faltenlänge entspricht.

Ergänzend zu dem Bahnmaterial 2 werden gemäß den Fig. 1 bis 5 Einlagen 10 entlang einer Zuführrichtung zugeführt, die parallel zur Längserstreckung der Einlagen verlaufen kann und die im gezeigten Beispiel mit der Zuführrichtung des Bahnmaterials 2 einen spitzen Winkel einnimmt. Die Einlagen 10 sind nach Abschluss des Faltprozesses in dem Stapel 9 zwischen den Falten des Bahnmaterials 2 angeordnet. Um die Einlagen 10 während des z-Faltens an dem Bahnmaterial 2 zu lokalisieren, kann vorgesehen sein, dass die Einlagen 10 an der Oberfläche des Bahnmaterials 2 haften, beispielsweise dadurch, dass auf den Einlagen 10 und / oder auf der Oberfläche des Bahnmaterials 2 ein Haftmittel angeordnet ist, beispielsweise ein Klebstoff.

Das beschriebene Verfahren kann verwendet werden, um Batteriezellen aus einem gefalteten Separatormaterial und hierzwischen wechselnd angeordneten Kathoden und Anoden herzustellen.

Das Bahnmaterial 2 ist dann als ein bahnförmiges Separatormaterial ausgeführt. Bei den Einlagen 10 handelt es sich um Kathoden und Anoden, die von den gegenüberliegenden Seiten des Bahnmaterials 2 zum Bahnmaterial 2 hin zugeführt werden und die beispielweise eine Flachform aufweisen. Hierfür ist beispielsweise ein jeweiliges Transportsystem nutzbar, zum Beispiel auf Basis von Transportsystemen mit gegenläufigen Rollen.

Der beschriebene Faltprozess wird als kontinuierlicher Prozess ausgeführt und ermöglicht es beispielsweise, wenigstens fünf Falten pro Sekunde im Stapel 9 zu erzeugen. Auch eine höhere Faltgeschwindigkeit kann vorgesehen sein, beispielsweise das Herstellen von wenigstens zehn Falten pro Sekunde.

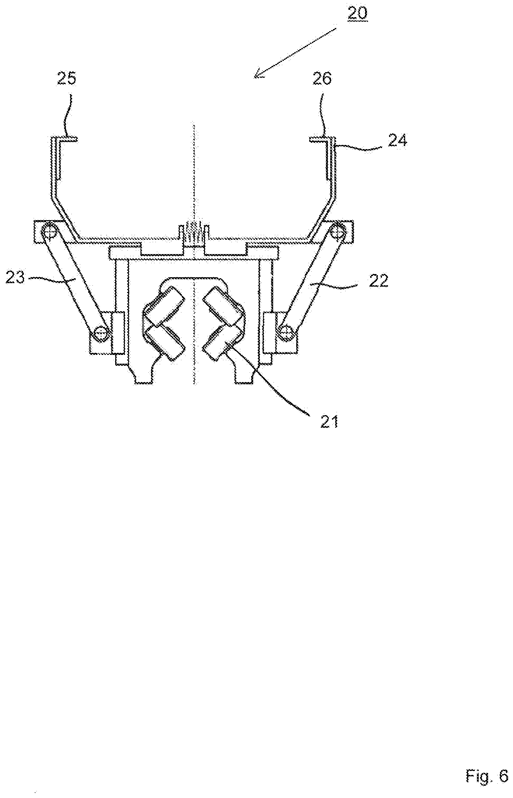

Fig. 6 zeigt eine schematische Darstellung einer Greifeinrichtung 20, die für die mehreren Greifeinrichtungen 4, 5 nutzbar ist. Ein Lagersystem 21 mit mehreren Rollen ist vorgesehen, zum Beispiel auch sechs oder zwölf Rollen, um die Greifeinrichtung 20 an einem Transportsystem (nicht dargestellt) aufzunehmen, welches eingerichtet ist, die Greifeinrichtung 20 auf einer umlaufenden Bewegungsbahn zu transportieren. Betätigbare Hebelarme 22, 23 sind schwenkbar aufgenommen, um das Öffnen und das Schließen eines Greifers 24 zu unterstützen, bei dem Greifarme, 25, 26 zum Beispiel mittels einer Zwangsmechanik betätigt werden. Alternativ kann vorgesehen sein, den Greifer 24 mittels eines Motors oder unter Verwendung eines Pneumatikzylinders zu betätigen. Die Greifarme 25, 26 sind eingerichtet, das zu faltende Bahnmaterial 2 wenigstens randseitig zu greifen.

Das zu faltende Separatormaterial kann unter Zugbeanspruchung als bandförmiges Endlosmaterial mit der Geschwindigkeit *v̅_{F}* in die Faltvorrichtung 1 eingezogen werden. Faltvorrichtung 1 weist die mindestens zwei sich gegenüberliegenden Greifersysteme auf, auf deren Spiegelachse das Bahnmaterial 2 geführt wird. Jedes Greifersystem besitzt n-viele einzelne unabhängig voneinander bewegliche Greifeinrichtungen 4, 5. Die Führungsbahn der Greifeinrichtungen 4, 5 ist umlaufend. Die Greifersysteme sind jeweils in dem Öffnungswinkel α zu der Zuführrichtung geneigt. Zur Erzeugung der Falten synchronisieren die Greifer der beiden Greifersysteme ihre Geschwindigkeit auf die das Bahnmaterial und fixieren diese alternierend.

Zum Zeitpunkt des Eingriffs der Greifer mit dem Bahnmaterial besteht keine Relativbewegung zwischen dem einzelnen Greifer und der Folienbahn (*v_{F}* = *v*_{*G*(*x,y*)}). Es werden als Einlagen 10 zuvor zugeschnittenes Anodenmaterial auf einer Seite und zuvor zugeschnittenes Kathodenmaterial auf der anderen Seite dem Verfahren abwechselnd zugeführt. Die Elektroden können auf eine noch ungefaltete Separatorbahn aufgelegt und an der Separatorbahn fixiert werden, zum Beispiel mittels Laminieren oder Kleben. Diese wird anschließend gefaltet. In den Falzen liegen als Einlagen 10 abwechselnd die zuvor geschnittene und auf die Separatorbahn gelegte Anoden- und Kathoden.

Die dem Verfahren zugeführte Anode kann simultan zu dem Aufziehen der Falte entlang der Führungsbahn des Greifersystems der Faltungsvorrichtung 1 zugeführt. Die Kathode kann entsprechend entlang der Führungsbahn des Greifersystems der Faltvorrichtung zugeführt werden. Die im Bahnmaterialkontakt stehenden Greifer verlangsamen ab dem Zeitpunkt der Fixierung ihre Geschwindigkeit kontinuierlich und bremsen so die entstehende z-gefaiteten Folienstruktur mit der Faltenlänge ab und erreichen im distalen Bereich 8 die Geschwindigkeit 0 ( *v_{Gx3}* = *v*_{*Gy*2} = *v_{F,B}* =0). Die entstehenden Falten werden durch einen Mechanismus kontinuierlich aus dem Faltungssystem abgeführt. Die Greifeinrichtungen 4, 5 lösen alternierend den Materialkontakt nach Abschluss des Faltvorganges und begeben sich auf der umlaufenden Führungsbahn wieder an den Beginn des Faltvorganges. Die Faltenerzeugung entsteht somit ohne Einfluss auf die Geschwindigkeit *v_{F}* des eingezogenen Separatormaterials.

## Patentansprüche

1. Verfahren zum z-Falten eines Bahnmaterials (2), wobei das Verfahren die folgenden Schritte aufweist:
- kontinuierliches Zuführen eines zu faltenden Bahnmaterials (2) in eine Faltvorrichtung (1) entlang einer Zuführrichtung,
- wechselseitiges Greifen des Bahnmaterials (2) in einem proximalen Bereich (3) der Faltvorrichtung (1) mittels Greifeinrichtungen (4, 5), die von gegenüberliegenden Seiten des Bahnmaterials (2) auf Lücke zu dem proximalen Bereich (3) hingeführt werden, wobei die Greifeinrichtungen (4, 5) das Bahnmaterial (2) randseitig auf gegenüberliegenden Seiten des Bahnmaterials (2) greifen,
- Halten und Transportieren des Bahnmaterials (2) mittels der Greifeinrichtungen (4, 5) in einen distalen Bereich (8) der Faltvorrichtung (1), wobei hierbei das Bahnmaterial (2) z-gefaltet wird, und
- Lösen des Bahnmaterials (2) von den Greifeinrichtungen (4, 5) und Ablegen des Bahnmaterials (2) in einem Stapel (9) mit Falten in dem distalen Bereich (8), wobei sich die Falten in dem Stapel (9) quer zur Zuführrichtung erstrecken,
wobei für die Greifeinrichtungen (4, 5) auf den gegenüberliegenden Seiten des Bahnmaterials (2) jeweils eine gerade Verbindungslinie zwischen einer proximalen Position der Greifeinrichtung beim Greifen des Bahnmaterials (2) in dem proximalen Bereich (3) und einer distalen Position derselben Greifeinrichtung beim Lösen des Bahnmaterials (2) in dem distalen Bereich (8) schräg zur Zuführrichtung verläuft und wobei ein Abstand zwischen benachbarten Greifeinrichtungen (4, 5) gleich einer Faltenlänge ist,
**dadurch gekennzeichnet, dass** eine Zuführgeschwindigkeit für das kontinuierliche Zuführen des zu faltenden Bahnmaterials (2) sowie eine Transportgeschwindigkeit für das Transportieren der Greifeinrichtungen (4, 5) zum proximalen Bereich (3) hin unabhängig voneinander einstellbar und aufeinander abgestimmt sind.

2. Verfahren nach Anspruch 1, **dadurch gekennzeichnet, dass** die Greifeinrichtungen (4, 5) auf den gegenüberliegenden Seiten des Bahnmaterials (2) zwischen der proximalen Position und der distalen Position zumindest abschnittsweise entlang einer Bewegungsbahn geführt werden, die entlang der geraden Verbindungslinie verläuft.

3. Verfahren nach Anspruch 1 oder 2, **dadurch gekennzeichnet, dass** die Greifeinrichtungen (4, 5) auf den gegenüberliegenden Seiten des Bahnmaterials (2) mittels einer jeweiligen Transporteinrichtung (6, 7) auf einer geschlossenen Bewegungsbahn von dem proximalen Bereich (3) über den distalen Bereich (8) wieder zurück zum proximalen Bereich (3) geführt werden,

4. Verfahren nach mindestens einem der vorangehenden Ansprüche, **dadurch gekennzeichnet, dass** die Zuführrichtung horizontal ausgerichtet ist.

5. Verfahren nach mindestens einem der vorangehenden Ansprüche, **dadurch gekennzeichnet, dass** in zumindest einem Teil der Falten des Stapels (9) Einlagen (10) angeordnet werden.

6. Verfahren nach Anspruch 5, **dadurch gekennzeichnet, dass** die Einlagen (10) vor und / oder während des z-Faltens an das Bahnmaterial (2) herangeführt werden.

7. Verfahren nach Anspruch 5 oder 6, **dadurch gekennzeichnet, dass** die Einlagen (10) vor dem Ablegen des Bahnmaterials (2) in dem Stapel (9) an diesem haftend angeordnet werden.

8. verfahren nach mindestens einem der Ansprüche 5 bis 7, **dadurch gekennzeichnet,**
**dass** das Bahnmaterial (2) ein Separatormaterial aus einem elektrisch isolierenden Werkstoff und die Einlagen (10) Elektroden sind, so dass der Stapel als z-gefalteter Stapel mit Anoden, Kathoden und Separator hergestellt wird.

9. Vorrichtung zum z-Falten eines Bahnmaterials (2), mit
- einer Zuführeinrichtung, die eingerichtet ist, ein zu faltendes Bahnmaterial (2) einer Faltvorrichtung (1) entlang einer Zuführrichtung kontinuierlich zuzuführen, und
- Greifeinrichtungen (4, 5), die eingerichtet sind,
- das Bahnmaterial (2) in einem proximalen Bereich (3) der Faltvorrichtung (1) randseitig auf gegenüberliegenden Seiten des Bahnmaterials (2) wechselseitig zu greifen, wobei die Greifeinrichtungen (4, 5) mittels einer Transporteinrichtung (6, 7) von gegenüberliegenden Seiten des Bahnmaterials (2) auf Lücke zu dem proximalen Bereich (3) hingeführt werden,
- das Bahnmaterial (2) zu halten und in einen distalen Bereich (8) der Faltvorrichtung (1) zu transportieren, wobei das Bahnmaterial (2) hierbei z-gefaltet wird, und
- sich von dem Bahnmaterial (2) zu lösen und das Bahnmaterial (2) in einem Stapel (9) mit Falten in dem distalen Bereich (8) abzulegen, wobei sich die Falten in dem Stapel (9) quer zur Zuführrichtung erstrecken,
wobei für die Greifeinrichtungen (4, 5) auf den gegenüberliegenden Seiten des Bahnmaterials (2) jeweils eine gerade Verbindungslinie zwischen einer proximalen Position der Greifeinrichtung beim Greifen des Bahnmaterials (2) in dem proximalen Bereich (3) und einer distalen Position derselben Greifeinrichtung beim Lösen des Bahnmaterials (2) in dem distalen Bereich (8) schräg zur Zuführrichtung verläuft und wobei ein Abstand zwischen benachbarten Greifeinrichtungen (4, 5) gleich einer Faltenlänge ist,
**dadurch gekennzeichnet, dass** eine Zuführgeschwindigkeit für das kontinuierliche Zuführen des zu faltenden Bahnmaterials (2) sowie eine Transportgeschwindigkeit für das Transportieren der Greifeinrichtungen (4, 5) zum proximalen Bereich (3) hin unabhängig voneinander einstellbar und aufeinander abgestimmt sind.

## Claims

1. A method for z-folding a web material (2), wherein the method comprises the following steps:
- continuously feeding a web material (2) to be folded into a folding device (1) along a feeding direction;
- alternatingly gripping the web material (2) in a proximal area (3) of the folding device (1) by means of gripping devices (4, 5), which are guided from opposing sides of the web material (2) toward the proximal area (3) with a gap, wherein the gripping devices (4, 5) grip the edges of the web material (2) on opposing sides of the web material (2),
- holding and transporting the web material (2) by means of the gripping devices (4, 5) in a distal area (8) of the folding device (1), thereby z-folding the web material (2), and
- detaching the web material (2) from the gripping devices (4, 5) and deositing the web material (2) in a stack (9) with folds in the distal area (8), wherein the folds in the stack (9) extend transverse to the feeding direction,
wherein, for the gripping devices (4, 5) on the opposing sides of the web material (2), a respective straight connecting line between a proximal position of the gripping device while gripping the web material (2) in the proximal area (3) and a distal position of the same gripping device while detaching the web material (2) in the distal area (8) runs obliquely relative to the feeding direction, and wherein a distance between adjacent gripping devices (4, 5) is equal to a fold length,
**characterized in that** a feeding rate for continuously feeding the web material (2) to be folded and a transport rate for transporting the gripping devices (4, 5) toward the proximal area (3) can be set independently of each other and are adjusted to each other.

2. The method according to claim 1, **characterized in that** the gripping devices (4, 5) on opposing sides of the web material (2) are guided at least in sections between the proximal position and distal position along a path of movement that runs along the straight connecting line.

3. The method according to claim 1 or 2, **characterized in that** the gripping devices (4, 5) on the opposing sides of the web material (2) are guided by means of a respective transport device (6, 7) on a closed path of movement from the proximal area (3) via the distal area (8) and back to the proximal area (3).

4. The method according to one of the preceding claims, **characterized in that** the feeding direction is oriented horizontally.

5. The method according to one of the preceding claims, **characterized in that** inserts (10) are arranged in at least a portion of the folds of the stack (9).

6. The method according to claim 5, **characterized in that** the inserts (10) are guided toward the web material (2) before and/or during z-folding.

7. The method according to claim 5 or 6, **characterized in that**, before depositing the web material (2) in the stack (9), the inserts (10) are adhesively arranged on the latter.

8. The method according to at least one of claims 5 to 7, **characterized in that** the web material (2) is a separator material comprised of electrically insulating material, and the inserts (10) are electrodes, so that the stack is fabricated as a z-folded stack with anodes, cathodes and separators.

9. A device for z-folding a web material (2), with
- a feeding device, which is configured to continuously feed a web material (2) to be folded to a folding device (1) along a feeding direction, and
- gripping devices (4, 5), which are configured to
- alternatingly grip the edges of the web material (2) on opposing sides of the web material (2) in a proximal area (3) of the folding device (1), wherein the gripping devices (4, 5) are guided by means of a transport device (6, 7) from opposing sides of the web material (2) toward the proximal area (3) with a gap,
- hold the web material (2) and transport it in a distal area (8) of the folding device (1), thereby z-folding the web material (2), and
- detach from the web material (2) and deposit the web material (2) in a stack (9) with folds in the distal area (8), wherein the folds in the stack (9) extend transversely to the feeding direction,
wherein, for the gripping devices (4, 5) on the opposing sides of the web material (2), a respective straight connecting line between a proximal position of the gripping device while gripping the web material (2) in the proximal area (3) and a distal position of the same gripping device while detaching the web material (2) in the distal area (8) runs obliquely relative to the feeding direction, and wherein a distance between adjacent gripping devices (4, 5) is equal to a fold length,
**characterized in that** a feeding rate for continuously feeding the web material (2) to be folded and a transport rate for transporting the gripping devices (4, 5) toward the proximal area (3) can be set independently of each other and are adjusted to each other.

## Revendications

1. Procédé pour le pliage en accordéon d'un matériau en bande (2), dans lequel le procédé présente les étapes suivantes :
- l'amenée en continu d'un matériau en bande (2) à plier dans un dispositif de pliage (1) le long d'une direction d'amenée,
- la saisie en alternance du matériau en bande (2) dans une zone proximale (3) du dispositif de pliage (1) au moyen de dispositifs de préhension (4, 5), lesquels sont amenés en quinconce à partir de côtés situés en vis-à-vis du matériau en bande (2) vers la zone proximale (3), dans lequel les dispositifs de préhension (4, 5) saisissent le matériau en bande (2) sur le côté du bord sur des côtés situés en vis-à-vis du matériau en bande (2),
- le maintien et le transport du matériau en bande (2) au moyen des dispositifs de préhension (4, 5) dans une zone distale (8) du dispositif de pliage (1), le matériau en bande (2) étant ce faisant plié en accordéon, et
- le détachement du matériau en bande (2) des dispositifs de préhension (4, 5) et le dépôt du matériau en bande (2) en une pile (9) avec des plis dans la zone distale (8), dans lequel les plis dans la pile (9) s'étendent transversalement à la direction d'amenée,
dans lequel, pour les dispositifs de préhension (4, 5), sur les côtés situés en vis-à-vis du matériau en bande (2), respectivement une ligne de liaison droite, entre une position proximale du dispositif de préhension lors de la saisie du matériau en bande (2) dans la zone proximale (3) et une position distale de ce même dispositif de préhension lors du détachement du matériau en bande (2) dans la zone distale (8), s'étend obliquement vers le dispositif d'amenée, et dans lequel une distance entre des dispositifs de préhension (4, 5) voisins est égale à une longueur de pli,
**caractérisé en ce qu'**une vitesse d'amenée pour l'amenée en continu du matériau en bande (2) à plier ainsi qu'une vitesse de transport pour le transport des dispositifs de préhension (4, 5) vers la zone proximale (3) peuvent être réglées indépendamment l'une de l'autre et sont adaptées l'une à l'autre.

2. Procédé selon la revendication 1, **caractérisé en ce que** les dispositifs de préhension (4, 5) sur les côtés situés en vis-à-vis du matériau en bande (2) sont guidés entre la position proximale et la position distale, au moins par tronçons, le long d'une trajectoire de déplacement qui s'étend le long de la ligne de liaison droite.

3. Procédé selon la revendication 1 ou 2, **caractérisé en ce que** les dispositifs de préhension (4, 5) sur les côtés situés en vis-à-vis du matériau en bande (2) sont guidés, au moyen d'un dispositif de transport (6, 7) respectif, sur une trajectoire de déplacement fermée de la zone proximale (3) via la zone distale (8) de nouveau en retour vers la zone proximale (3).

4. Procédé selon l'une au moins des revendications précédentes, **caractérisé en ce que** la direction d'amenée est orientée horizontalement.

5. Procédé selon l'une au moins des revendications précédentes, **caractérisé en ce que**, dans au moins une partie des plis de la pile (9), des insertions (10) sont disposées.

6. Procédé selon la revendication 5, **caractérisé en ce que** les insertions (10) sont rapprochées du matériau en bande (2) avant et/ou pendant le pliage en accordéon.

7. Procédé selon la revendication 5 ou 6, **caractérisé en ce qu'**avant le dépôt du matériau en bande (2) en la pile (9), les insertions (10) sont disposées de manière à adhérer à celle-ci.

8. Procédé selon l'une au moins des revendications 5 à 7, **caractérisé en ce que** le matériau en bande (2) est un matériau séparateur en une matière d'isolation électrique et que les insertions (10) sont des électrodes, de sorte que la pile est fabriquée en tant que pile pliée en accordéon avec des anodes, des cathodes, et un séparateur.

9. Dispositif pour le pliage en accordéon d'un matériau en bande (2), avec
- un dispositif d'amenée étudié pour l'amenée en continu d'un matériau en bande (2) à plier d'un dispositif de pliage (1) le long d'une direction d'amenée, et
- des dispositifs de préhension (4, 5), lesquels sont étudiés
- pour saisir en alternance le matériau en bande (2) dans une zone proximale (3) du dispositif de pliage (1) du côté du bord sur des côtés situés en vis-à-vis du matériau en bande (2), dans lequel les dispositifs de préhension (4, 5) sont amenés en quinconce, au moyen d'un dispositif de transport (6, 7), à partir de côtés situés en vis-à-vis du matériau en bande (2), vers la zone proximale (3),
- pour maintenir le matériau en bande (2) et le transporter dans une zone distale (8) du dispositif de pliage (1), dans lequel le matériau en bande (2) est ce faisant plié en accordéon, et
- pour se détacher du matériau en bande (2) et déposer le matériau en bande (2) en une pile (9) avec des plis dans la zone distale (8), dans lequel les plis dans la pile (9) s'étendent transversalement à la direction d'amenée,
dans lequel, pour les dispositifs de préhension (4, 5) sur les côtés situés en vis-à-vis du matériau en bande (2), respectivement une ligne de liaison droite, entre une position proximale du dispositif de préhension lors de la saisie du matériau en bande (2) dans la zone proximale (3) et une position distale de ce même dispositif de préhension lors du détachement du matériau en bande (2) dans la zone distale (8), s'étend obliquement vers le dispositif d'amenée, et dans lequel une distance entre des dispositifs de préhension (4, 5) voisins est égale à une longueur de pli,
**caractérisé en ce qu'**une vitesse d'amenée pour l'amenée en continu du matériau en bande (2) à plier ainsi qu'une vitesse de transport pour le transport des dispositifs de préhension (4, 5) vers la zone proximale (3) peuvent être réglées indépendamment l'une de l'autre et sont adaptées l'une à l'autre.
